# EUROPEAN PATENT SPECIFICATION

(11) **EP 4 626 791 B1**
(45) Date of publication and mention of the grant of the patent: **23.09.2026**
(21) Application number: 23817226.6
(22) Date of filing: 27.11.2023
(51) Int. Cl.: B65B 5/00, B65B 43/26, B65G 47/61, B65G 17/48

(54) **SORTING SYSTEM FOR THE SELECTIVE LOADING OF BAGS WITH DISCRETE PRODUCTS**
SORTIERSYSTEM ZUM SELEKTIVEN BELADEN VON BEUTELN MIT DISKRETEN PRODUKTEN
SYSTÈME DE TRI POUR LE CHARGEMENT SÉLECTIF DE SACS AVEC DES PRODUITS DISCRETS

(30) Priority: 28.11.2022 NL 2033626
(43) Date of publication of application: 08.10.2025
(73) Proprietor: Vanderlande Industries B.V., 5466 RB Veghel (NL)
(72) Inventor: VAN DORST, Maikel Theodorus Petrus Willebrordus, 5466 RB Veghel (NL); VERVOORT, Petrus Theodorus Cornelis, 5466 RB Veghel (NL)
(74) Representative: Algemeen Octrooi- en Merkenbureau B.V.
(86) International application number: PCT/NL2023/050619
(87) International publication number: WO 2024/117899

(56) References cited:
- US-A- 5 664 406
- US-A1- 2021 053 763
- US-B2- 10 647 523

## Description

The present invention relates to a sorting system for the selective loading of bags with discrete products via fill openings situated at their respective top sides. Such a sorting system is used for example for sorting of products in bags by a packaging service at a sorting location, wherein the bags filled with the products are then transported to various destinations, for example in trucks on the road or in airplanes. In the known systems, the operation is such that personnel manually hang up empty bags to be filled on a bag holder which is provided permanently at the downstream end of a chute. A product is selectively placed on the chute by an automated sorting device, for example by pushing it onto the chute, after which the respective product slides on the chute and drops into an opened bag, hanging from a bag holder, provided at the downstream end. As soon as the bag is sufficiently full, personnel manually remove the full bag from the bag holder and replace it with a following empty and opened bag. Such bags, also known as forever bags, are provided with a total of four eyes near their fill opening. The bag holders each contain two parallel rods, which are inserted into two eyes of a bag during use. The bags are manually hung in a row on the two rods. As soon as the first opened bag is sufficiently full, it is manually pushed from the rods and closed. In this way, the next bag becomes available for manual opening and filling. The use of the forever bags as described above is labor intensive.

In the American publication US 2020/130952 A1, a system is described in which bags are used which are each provided with a self-closing frame at both their upper end and their lower end. Each frame is circular and comprises four hingeably connected strip-shaped frame parts which in the closed state of the frame are placed against each other in pairs and in the opened state form a diamond-shaped opening. The bags each hang by their upper frame on a bag hanger having a guide for the opening and closing of the frame and being hung on a trolley which runs along a transport guide. In their closed state, the frames extend across the transport direction and the guides extend parallel to the transport direction. In a top view, the frames and the corresponding guide form a fork. By pushing V-shaped blocks positioned along the transport route towards each other against opposite hinges of the frame, the other two hinges are forced to move away from each other parallel to the transport direction, being guided by the guide, so that the frame and thus the bag is opened in a diamond shape. Thus, this can occur either at the top side of the bag in order to fill it or at the bottom side of the bag in order to empty the bag. The guide in a top view extends straight above the diamond shape of the opened frames and forms an obstacle to objects with which the bag is to be filled during the filling of the bags. The bags are a permanent part of the system and thus are not intended and also not suitable for transporting in airplanes or trucks to a destination.

In European patent application EP 2418160 A1, there is described a transport system for carrying bags in which each bag is provided with a right-angled carrying frame. The inside of this carrying frame forms a fill opening. The carrying frame is hung up by a pressure plate on a transport hook which can move along a guide. The pressure plate in operation is led along an inclined plane such that the pressure plate and with it the carrying bag is rotated through 90 degrees about a vertical axis. The pressure plate is likewise placed against the action of gravity from a primarily vertical orientation into a sloping orientation, so that the fill opening becomes accessible in order to fill the carrying bag with a product via this fill opening.

In the American publication US 4263768, a packaging machine is described which is adapted to fill envelope-like bags with solid or liquid food products in brief succession at a single filling position. The packaging machine comprises carriers which are each designed to have two clamps, which can each grasp a bag at the upper end of its two respective lengthwise sides. Each carrier is moreover provided with a rod mechanism which extends during operation beneath a bag and which is supported by and is connected to a transport chain. The clamps are connected to the rod mechanism so that the clamps can be opened and closed as well as moved toward and away from each other thanks to the operation of the rod mechanism and because of the interaction between cam bodies connected to the rod mechanism and cam ways established along the transport path of the rod mechanism.

In the American publication US 2021/0053763 A1, a system is described in which transport bags are permanently connected to a transport unit, each of them hanging from a rail guide via a trolley. By the sideways tilting of brackets of each transport unit, to which brackets the transport bags are permanently connected, the fill openings of the transport bags can be opened or closed. US 2021/0053763 A1 does not disclose specifically how such a sideways tilting can be implemented and it limits itself to stating that this can be done with the aid of a suitable actuator device.

In the American publication US 2019/0300294 A1, a mechanism is described having a pivoting cam by which a frame can be tilted, where a transport bag 15 is permanently connected.

The purpose of the invention is to create a sorting system according to the preamble which forms in its preferred embodiments a solution or at least an improvement over the aforesaid objections. A further purpose of the invention is to create a sorting system in which bags can be selectively opened, filled with products, such as packages to be delivered to various addresses in particular, and closed once more in a dependable manner with a high degree of automation. The invention also intends to create a sorting system having a high sorting capacity.

Given the above objectives, the invention creates a sorting system for the selective loading of bags with discrete products, comprising:
- a bag transport device for the selective transporting of bag holders with bags hanging therefrom to one of multiple filling positions, wherein at least some of the multiple filling positions are situated next to each other in a row of filling positions and wherein each bag holder comprises a frame having two engaging frame parts which can move away from each other into an open state of the frame and toward each other into a closed state of the frame, which are designed to be connected to the bag near its fill opening on two sides of the fill opening situated opposite each other in order for the fill opening of the bag to be opened by virtue of said connection in the open state of the frame and for the fill opening of the bag to be closed in the closed state of the frame, the bag transport device being provided with a transport guide and trolleys which are movable along the transport guide and wherein the bag holders are each hung from two trolleys,
- a product feed device for the selective feeding of products from the top side of the opened fill opening of a bag hanging from the bag transport device via the opened fill opening to the bag at the location of one of the multiple filling positions,
wherein the bag transport device is adapted to move the frame of the respective bag holder from the closed state to the open state by the transporting of a bag to a selected filling position.

When using such a system, the frame will be moved from the closed state to the open state during the transporting of a bag to a selected filling position, such that a bag will be opened at the location of a filling position and is directly accessible for being filled from above. Thus, the displacement of the frame from the closed state to the open state will take place during the transporting of a respective bag by the bag transport device. Moreover, no separately operated means are required in order to open the bag at the location of the filling position, which works to the benefit of the reliability of the system. The fact that the bag transport device is provided with a transport guide and trolleys which are movable along the transport guide, the bag holders each being hung from two trolleys, wherein the trolleys and the transport guide will thus extend above the bag holders and the bags, affords the benefit that it is easier to limit or prevent swinging of the bags and/or that extra possibilities are provided for opening and closing the bag, as shall become more clear from the following. Moreover, the weight of the bag with its contents is thus distributed between two trolleys, each of which is guided by the transport guide, so that the load per trolley is decreased and the bag can be made suitable for being more heavily loaded. The fact that at least some of the multiple filling positions are placed alongside each other in a row of filling positions brings the advantage that parts of the system associated with the filling positions can be designed repetitively and the system can be efficiently adapted to carry out sorting activity. The fact that the bag transport device is designed for the selective transporting of bag holders with bags hanging therefrom to one of multiple filling positions makes the system suitable for use within a sorting system, such as one for packages. Thanks to hanging bags from the bag transport device, including their contents, the bag transport device is mechanically loaded with the entire weight of the bags, including any contents, or at least with the greater portion of that entire weight.

In one embodiment, the transport guide comprises, both upstream and downstream from a filling position, preferably from each filling position, two parallel running transport guide portions, each of which is adapted to guide one of the two trolleys belonging to a bag holder, wherein the frame belonging to the bag holder extends in the opened state, looking from above, between the two parallel running transport guide portions. The two parallel running transport guide portions afford the possibility of keeping clear the space above an opened bag at the location of a filling position so that the loading of the bag can proceed without hindrance.

In a further embodiment, the transport guide has a single feed transport guide portion, upstream from the two parallel running transport guide portions, for the guiding of both trolleys belonging to a bag holder, and the transport guide has, between the single feed transport guide portion on the one hand and the two parallel running transport guide portions on the other hand, two diverting switches for the guiding of a front trolley belonging to a bag holder from the single feed transport guide portion to one of the two parallel running transport guide portions and for the guiding of a rear trolley belonging to a bag holder from the single feed transport guide portion to the other one of the two parallel running transport guide portions. The orientation of the bag holder and thus of the bag is coupled to the orientation of the line of connection between the two trolleys belonging to a bag holder. In this way, the orientation of the bag with respect to the transport direction can turn through an angle, for example one of 90 degrees, by means of the changing of the respective two trolleys from the single feed transport guide portion to the two parallel running transport guide portions.

For purposes of an easy opening of the bags, in a further embodiment the distance between the front and rear trolley belonging to a bag holder during the guiding on the feed transport guide portion is greater than the distance between these two trolleys during the guiding on the respective two parallel running transport guide portions at the location of the filling position. Thanks to the respective smaller distance, opposite situated ends of stretched sides of a closed bag can be easily moved toward each other, thereby opening the bag.

The transport guide moreover can be efficiently utilized if the transport guide has, downstream from the two parallel transport guide portions, a single removal transport guide portion for the guiding of both trolleys belonging to a bag holder, and wherein the transport guide has between the two parallel transport guide portions on the one hand and the single feed transport guide portion on the other hand two merging switches for the guiding of the two trolleys belonging to a bag holder from the respective two parallel transport guide portions to the removal transport guide portion.

In this case, the transport guide can be efficiently utilized if two transport guide portions belonging to two filling positions located next to each other and situated on opposite sides of the two filling positions for at least a portion of their respective lengths are formed by a common feed transport guide portion, wherein the transport guide at the downstream end of the common feed transport guide portion is provided with a further diverting switch at the downstream side from where the two filling positions are located and/or by a common removal transport guide portion, wherein the transport guide at the upstream end of the common removal transport guide portion is provided with a further merging switch at the upstream side from where the two filling positions are located. Thus, the possibility can be provided for trolleys belonging to different bag holders to pass each other and a fully or at least sufficiently filled bag does not need to wait for a downstream bag which is not yet sufficiently full, despite the fact that trolleys of the respective bag holder are led by the same common feed transport guide portion and/or common removal transport guide portion.

In a further embodiment, the bag transport device is adapted to move the frame of the corresponding bag holder by virtue of the transporting of a bag away from a selected filling position from the open state to the closed state. Thus, neither is there any need for the bag to be closed, while it is still at the filling position, and the filling position can become available for a following bag to be filled, directly after a bag has been filled with a last product for that bag at the respective filling position and thus even before the bag is closed.

The opening and closing of the bags can take place effectively and efficiently if, in one possible embodiment, the engaging frame parts are adapted to move in the horizontal direction away from or toward each other during a movement between the open state and the closed state of the frame.

Especially in order to make the bags used also suitable for being used independently of the system, for example for road transport, in one embodiment each engaging frame part is provided with at least one engaging body which is adapted to grasp a bag releasably near its fill opening for the connecting of the bag holder to the bag. For example, an engaging body can be configured as a hook, which engages with an eye of a bag, as in the forever bag type. A further benefit of such an embodiment is that the system does not need to have any arrangements for emptying the bags after these have been filled.

In order to mechanize or automate or at least make easier the connecting of a bag to a frame and the removal of a bag from the frame, in one embodiment at least one, preferably each engaging body is operatively connected to an operating element for the control of the respective at least one or each engaging body for moving the engaging body between a position that can be reached by a bag and a position that cannot be reached by a bag.

If two engaging frame parts are elongated and extend both in the open state and in the closed state parallel to each other and directly opposite each other, one can obtain in a relatively simple manner an at least mostly rectangular opened fill opening or at least an opened fill opening with straight parallel flanks. It may even happen that the engaging frame parts do not extend parallel to each other for some of the time during the opening and closing of the frame.

When using two trolleys belonging to a bag holder as described above for one embodiment, in a further embodiment the two trolleys are connected to the frame at two oppositely situated ends of the two parallel engaging frame parts. By moving the two trolleys toward or away from each other, the frame can be moved respectively to the closed and to the open state.

Especially in order to achieve a robust system, the frame is preferably a closed deformable frame which is adapted to completely surround or at least to follow the opening of a bag.

In a specific embodiment, the closed frame comprises two sets of mutually hingeably connected elongated connection frame parts, wherein each set of connection frame parts is hingeably connected at mutually opposite situated ends thereof to respective ends of the two engaging frame parts.

In a further specific embodiment, each set of connection frame parts comprises not more and not less than two connection frame parts. In total, the frame then comprises six hingeably connected frame parts, namely two engaging frame parts and four (two times two) connection frame parts.

When using two trolleys belonging to a bag holder as described above for one embodiment, in a further embodiment the two trolleys belonging to a bag holder are each connected to a set of the mutually hingeably connected connection frame parts, preferably at the location of hinges which hinge the respective connection frame parts to each other.

The system is also suitable for use in combination with bags which are provided with a zipper closure by which the fill opening of the bag can be opened or closed. For this, the system can comprise a zipper engaging device for grasping of a zipper slider of a zipper closure of a bag for the closing of the zipper closure by a zipper engaging body of the zipper engaging device.

The necessary movement of the zipper slider with respect to the fill opening for the opening and closing can be achieved by designing the zipper engaging device with a displacement mechanism for moving the zipper engaging body while the bag is standing still. However, it may also be preferable for the zipper engaging device to be adapted to work by virtue of the transporting of a bag with a zipper closure which is to be closed by the bag transport device, whereby the zipper engaging device comes into engagement with the zipper slider of the zipper closure, such that the relative moving of the zipper slider with respect to the bag can be brought about due to the movement of the bag by the bag transport device, wherein the zipper engaging body in spatial terms can adopt a fixed position or it only needs to be movable to a limited degree to be in the path or outside the path of the zipper slider.

The invention moreover provides a method for the use of a system according to the invention as described above. The method comprises:
- transporting of a bag connected to a bag holder by the bag transport device to a filling position,
- moving of the frame of the bag holder during said transporting of the bag to the filling position and/or after arrival of the bag at the filling position from the closed state to the open state, wherein the fill opening of the bag is opened,
- feeding of at least one product by the product feed device to the filling position, wherein the at least one product drops into said bag via its opened fill opening,
- transporting of the bag filled with the at least one product away from the filling position by the bag transport device,
- moving of the frame of the bag holder from the open state to the closed state during the transporting of the bag away from the filling position or still at the filling position, wherein the fill opening of the bag is closed.

In one possible embodiment, the method furthermore comprises the releasing of the bag filled with the at least one product at the location of the filling position from the bag holder after the moving of the frame from the open state to the closed state.

The benefits pertaining to the method according to the invention should be evident to the skilled person from the previous explanation of the system according to the invention.

The invention shall be explained more closely in the following with the aid of the description of possible embodiments of the invention, making reference to the following schematic drawings, which should not be interpreted as limiting the invention:
Figure 1 shows in an isometric view a first embodiment of a system according to the invention implemented as a sorting system;
Figure 2 shows in an isometric view a portion of the bag transport device which is part of the system according to Figure 1;
Figures 3a and 3b show an isometric view of a bag holder such as is part of the system according to Figure 1 respectively in the tightly closed state and the open state;
Figures 4a and 4b show the bag holder according to Figure 3b in front view and in side view;
Figure 5 shows in an isometric view the bag holder according to Figures 3b to 4b including a corresponding bag shown with dashed lines;
Figures 6a and 6b show the detail of Figure 5, wherein an engaging body of the bag holder is respectively in an engaging state and a non-engaging state;
Figure 7 shows in an isometric view the bag transport device of a system according to the invention implemented as a sorting system in a second embodiment thereof;
Figure 8a and 8b show in an isometric view a bag holder being part of the sorting system according to Figure 7 including the corresponding bag respectively in the closed state of the bag holder and in the open state of the bag holder;
Figure 9 shows in another isometric view the bag holder according to Figure 9b with corresponding bag.

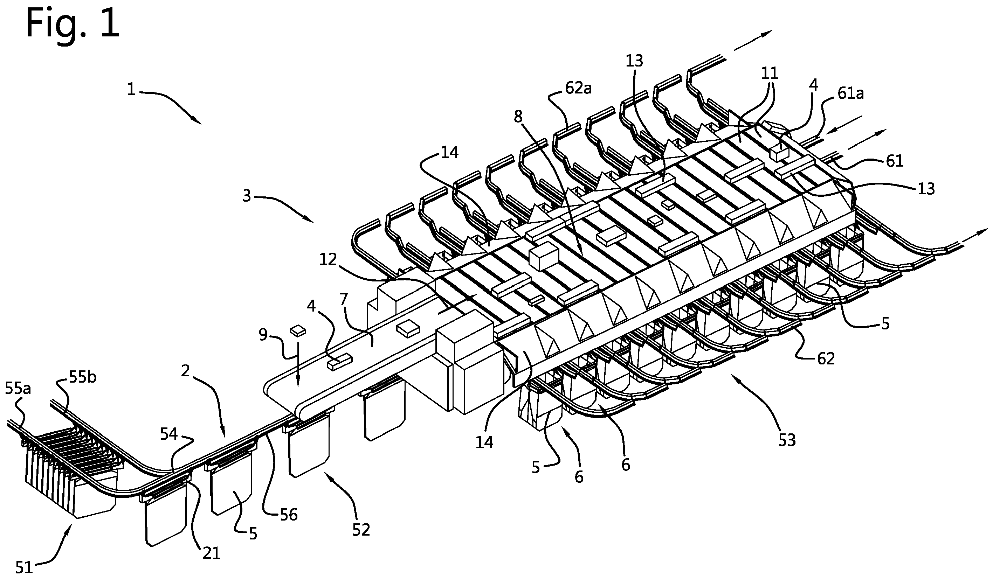

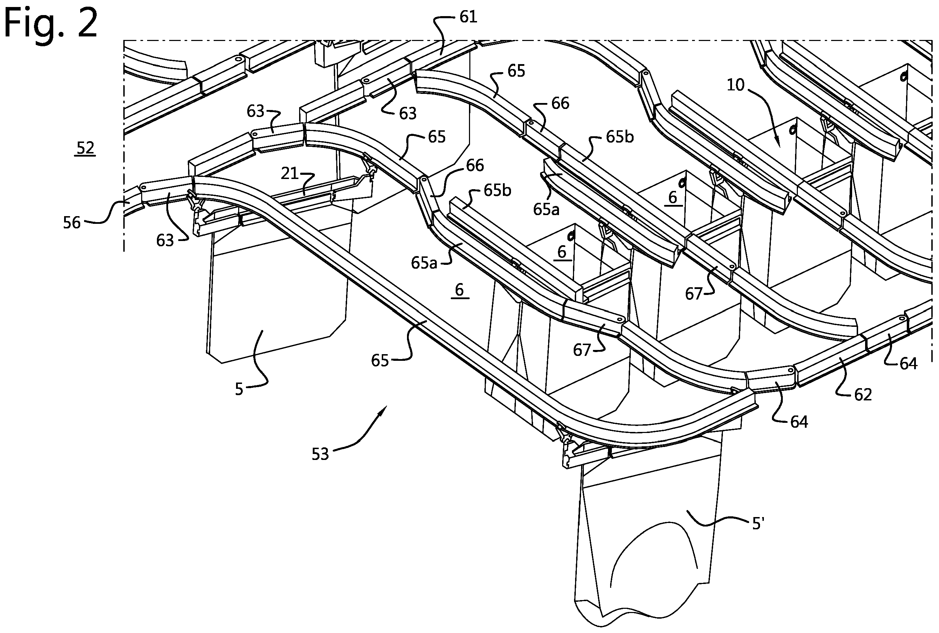

Figure 1 shows part of a sorting device 1 having a bag transport device 2 (also see Figure 2) and a product feed device 3. Product feed device 3 is designed for the selective feeding of products 4 to a bag 5 at the location of one of a number of filling positions 6. The bags 5 each have a fill opening 10, which are each situated at the respective top sides of the respective bags 5, at least if the bags 5 are hung from the bag transport device 2. The fill openings 10 can be opened in a manner to be described further below, so that the respective bags 5 can be filled and closed by the opened fill opening 10, thereby being unsuited to being filled and then emptied. Sorting device 1 is thus especially suitable for the sorting of relatively small packages and envelopes having an elevated risk of getting lost or damaged.

Product feed device 3 comprises a product feed conveyor 7, such as a conveyor belt, for example, and a sorting conveyor 8, which at its upstream end is aligned and connected to the downstream end of the product feed conveyor 7. Products 4 to be sorted are fed in automated manner, as is typically known to the skilled person, to the upstream end of product feed conveyor 7, as shown schematically by the arrow 9.

The sorting conveyor 8 is of the pushing shoe type, as is generally known to the skilled person, and it comprises, looking in the transport direction 12, elongated supporting bodies 11 arranged in succession. A comparable sorting conveyor is described for example in the European publication EP 924147. The length direction of each of the supporting bodies 11 extends horizontally and perpendicularly to the transport direction 12 for the products 4. All the supporting bodies 11 together form an endless loop with an upper right loop portion, the corresponding supporting bodies 11 of which are visible in Figure 1, and a lower right loop portion. Said right loop portions are connected to each other at the upstream end and at the downstream end of the sorting conveyor 8 by 180° bends, which extend in the vertical plane. The top sides of the supporting bodies 11 situated in the upper right loop portion each form a support surface for the products 4 to be sorted, each of which can rest against one or more adjacent support surfaces. The sorting conveyor 8 further comprises a pushing body 13, also known as a pushing shoe, per two supporting bodies 11, which can slide to the left or right with respect to a corresponding supporting body 11. Alternatively, the sorting conveyor could also comprise a pushing body for more than two supporting bodies, such as four supporting bodies, or for each supporting body. Each pushing body 13 in operation can push a product 4 placed on a corresponding support surface or on a number of corresponding support surfaces to the left or right, looking in the transport direction 12 of respective support surface(s), to a chute 14 situated there. Sorting device 1 comprises two rows of such chutes 14, which are provided on oppositely located sides of the sorting conveyor 8.

At the lower ends of each of the chutes 14, there are located during operation bags 5 hanging from bag holders 21 at the location of a corresponding filling position 6. The respective bags 5 located at the location of the filling positions 6 are in an open state and products 4 which will slide down from a chute 14 will drop into the respective bag 5.

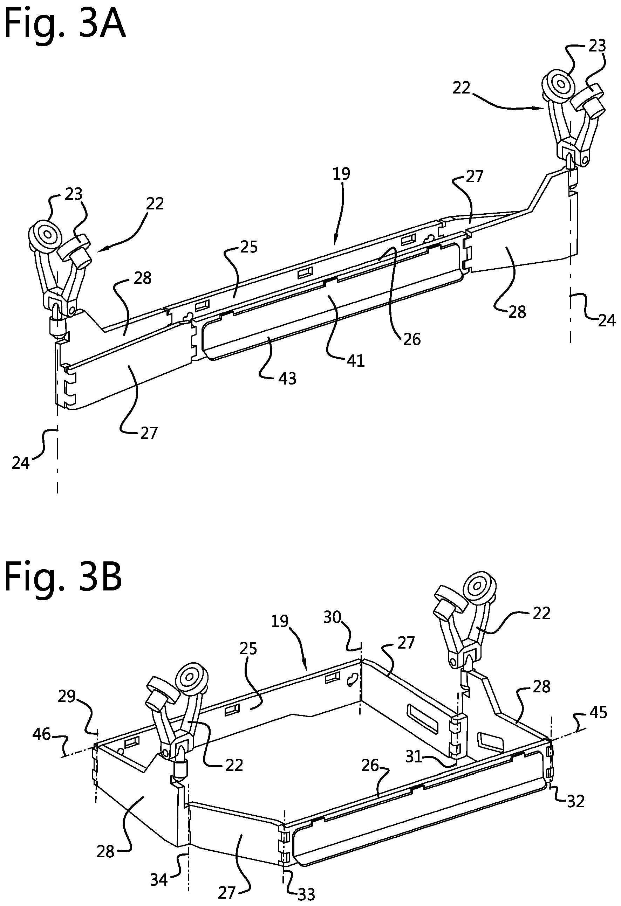

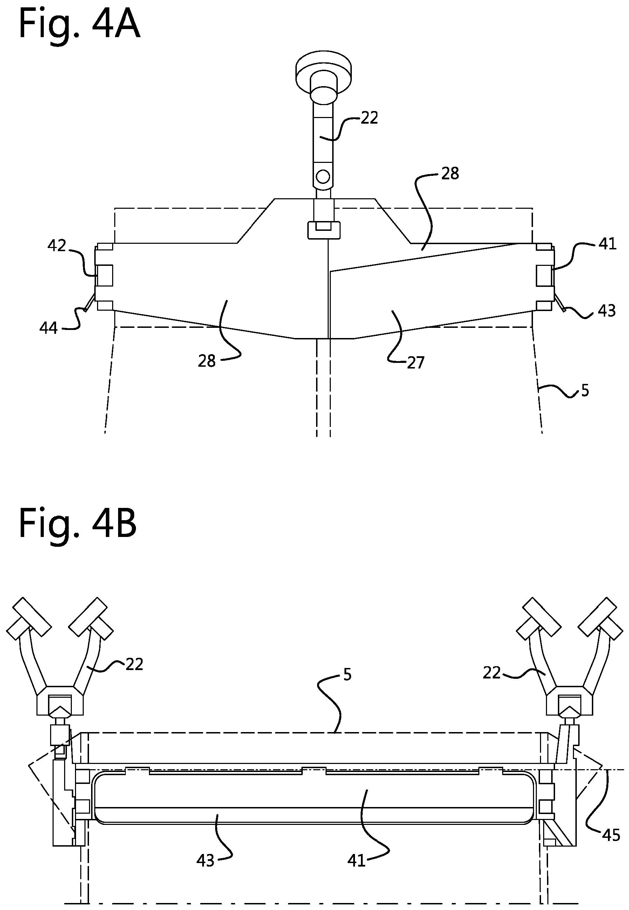

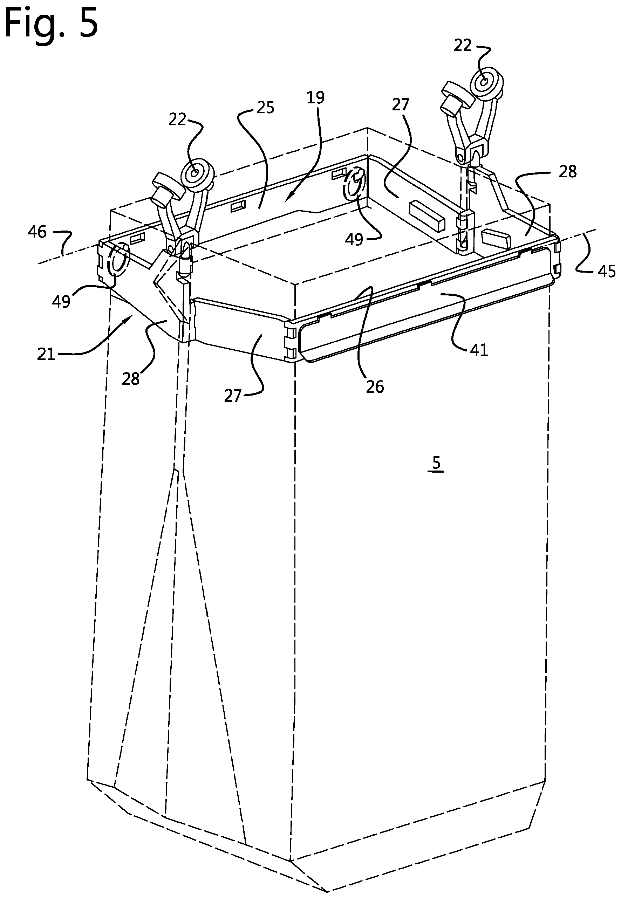

Figures 3a and 3b show that a bag holder 21 comprises a frame 19 with two engaging frame parts 25, 26. The engaging frame parts 25, 26 are elongated and strip-shaped and they are connected to each other at their ends via two sets of two connection frame parts 27, 28 each, which likewise constitute part of the frame. The total of six frame parts 25-28 are mutually hingeable about hinge axes 29-34. In this way, the frame of bag holder 21 can take up a closed state according to Figure 3a and an open state according to Figure 3b, 4a, 4b, 5. The engaging frame parts 25, 26 extend in parallel with each other both in the closed state and in the open state.

The bag transport device 2 comprises a system of rail guides, yet to be mentioned further below, along which the bag holders 21 can be guided (also see Figures 3a to 5). For this purpose, each bag holder 21, more specifically via its frame 19, is hung from two trolleys 22, each being configured with two guide wheels 23 which in turn are adapted to cooperate in a guiding manner with the rail guides of the bag transport device 2. Each of the two trolleys 22 is connected to the frame 19 rotatably about a corresponding rotation axis 24, more specifically to the respective connection frame parts 28 at the location of an elevated portion thereof, of the corresponding bag holder 21. Rotary axes 24 and hinge axes 29-34 extend parallel to each other.

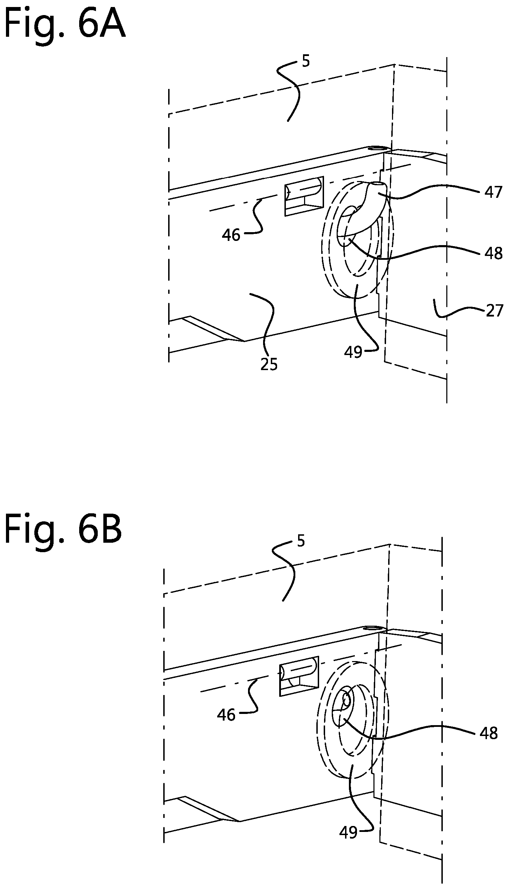

Per engaging frame part 25, 26, each bag holder 21 comprises an operating strip 41, 42 on the respective outer sides of the particular engaging frame parts 25, 26, extending over almost the entire length of the corresponding engaging frame part 25, 26 and having on the underside a folded engaging edge 43, 44. Each operating strip 41, 42 is hingeably connected to the corresponding engaging frame part 25, 26 about hinge axes 45, 46 (also see Figures 6a, 6b). The hinge axes 45, 46 extend parallel to the length directions of the corresponding engaging frame parts 25, 26 and of the corresponding operating strips 41, 42 and perpendicular to the axes 24 and 29-34.

Near their ends, each of the operating strips 41, 42 is provided with hooks 47 on the sides facing the corresponding engaging frame parts 25, 26. These hooks 47 extend in the nonoperative state of the operating strips 41, 42, as in Figures 3a to 6a, through passages 48 which are provided in the corresponding engaging frame parts 25, 26, so that the hooks 47 also extend on the inner sides of the engaging frame parts 25, 26. The bags 5 used are provided with four eyes 49 near their fill opening 10. By placing these eyes over the hooks 47, a bag 5 can be hung up on these hooks 47 and thus on the frame 19 of a bag holder 21, regardless of whether the frame 19 is in the closed state or in the open state. By moving a frame 19 from the closed state to the open state, as shall be further explained below, the fill opening 10 of a bag 5 hanging on a bag holder 21 can thus also be opened. By hinging the operating strips 41, 42 from the inoperative state thereof away from the corresponding engaging frame parts 25, 26 about the hinge axes 45, 46, which can be done by grasping engaging edges 43, 44 of the operating strips 41, 42 in an automated or other manner, the hooks 47 will retract and the corresponding bag 5 will be released from the bag holder 21. Thus, the respective bag holder 21 becomes available for hanging on it a following, still empty bag 5.

Figure 1 shows a buffer region 51, adjacent to a feed region 52 and again adjacent to a sorting region 53 of the bag transport device 2. Because each bag holder 21 is hung up on two trolleys 22, the possibility exists of letting the trolleys 22 belonging to a bag holder 21 slide through two parallel rail guides, as is shown for example at the left side of Figure 1 for buffer region 51, where the two trolleys 22 belonging to bag holders 21 are guided by parallel rail guides 55a, 55b. If the two trolleys 22 are led along two parallel rail guides, then the distance between these two rail guides will determine whether the frame of the respective bag holder 21 will be in a closed state as in buffer region 51 or in the open state as shall be further explained below for sorting region 53. The distance between rail guides 55a, 55b is chosen such that the frames 19 of the bag holders 21 are stretched in the buffer region 51 and therefore they are in the closed state, just like the bags 5 hanging from the respective bag holders 21. In the buffer region 51, the bag holders 21 and the bags 5 hanging therefrom can be positioned relatively close together and they will take up relatively little space as a result.

With the aid of the at least one operable release body at the downstream end of the buffer region 51, the front bag holder 21 in the buffer region can be released for further transport to the feed region 52, which movement can occur for example under the effect of gravity and/or take-alongs, as is familiar to the skilled person. At the location of merging switch 54, the two parallel rail guides 55a, 55b in buffer region 51 pass into the single rail guide 56 in feed region 52, the frames 19 of the bag holders 21 remaining in a closed state while the corresponding two trolleys 22 are led across the single rail guide 56. It is possible to configure the frames of the bag holders 21 with spring bodies, which tilt the connection frame parts 27, 28 about hinge axes 31, 34 and pivot them toward each other.

Figure 2 shows part of the sorting region 53, at least insofar as concerns the bag transport device 2, in greater detail. In the sorting region 53, as already mentioned above, there are a couple of rows of filling positions 6 placed alongside each other, where the bags 5 in the opened state can be positioned with the aid of the bag transport device 2, in order to be filled selectively with products 4 by the operation of the sorting conveyor 8.

For each row of filling positions 6, the bag transport device 2 comprises a single feed rail guide 61 and a single removal rail guide 62, which extends parallel to the feed rail guide 61. Feed rail guide 61 adjoins and lies as an extension of rail guide 56. Per set of two filling positions 6 located alongside each other, the feed rail guide 61 comprises a diverting switch 63 and the removal rail guide 62 comprises a merging switch 64. In addition, a diverting switch 63 is provided for the furthest upstream filling position 6 in the respective row and a merging switch 64 is provided for the most downstream filling position 6. With the aid of the diverting switches 63, a bag holder 21 can be transferred from the single feed rail guide 61 to two parallel sorting rail guides 65. The sorting rail guides 65 extend at right angles to the feed rail guide 61 and to the removal rail guide 62, at least at the location of the filling positions 6. Per set of two adjacent filling positions 6, each of the sorting guides 65 is provided with a diverting switch 66 and a merging switch 67. Between the pairs of a diverting switch 66 and a merging switch 67 belonging to a sorting guide 65, the respective sorting guide 65 comprises two parallel sorting rail guide portions 65a, 65b.

The distance between the sorting rail guide portions 65a, 65b belonging to a filling position 6 is so small that a bag holder 21 whose corresponding two trolleys 22 are being led along the respective sorting rail guide portions 65a, 65b is forced to take up the open state at the location of the respective filling position 6. At the location of a filling position 6, the trolley 22 is blocked in operation by an operable end stop element. As soon as a respective bag 5' has been filled sufficiently, it can again be diverted from the respective sorting rail guides 65 after the end stop element has been operated in order to move it out from the path of the trolley 22 and by appropriate actuation of the merging switches 67 and merging switches 64 belonging to the respective filling position, by which the respective two trolleys 22 of the bag holder 21 are transferred to the removal rail guide 62 and will take up the closed state there.

Downstream from the sorting conveyor 8, feed rail guide 61 passes via a bend of just 180 degrees, not further shown, into a second feed rail guide 61a via which bags can be taken to the filling positions 6 belonging to the other row of filling positions 6 of the sorting device 1, and further diverted downstream from those filling positions via removal rail guide 62a to a position where the bags 5, filled in the meantime with products 4 by the sorting conveyor 8, are removed from the corresponding bag holders 21. The filled bags 5 are then available for further transport, for example by road, to the destination of the products 4 found in the bags.

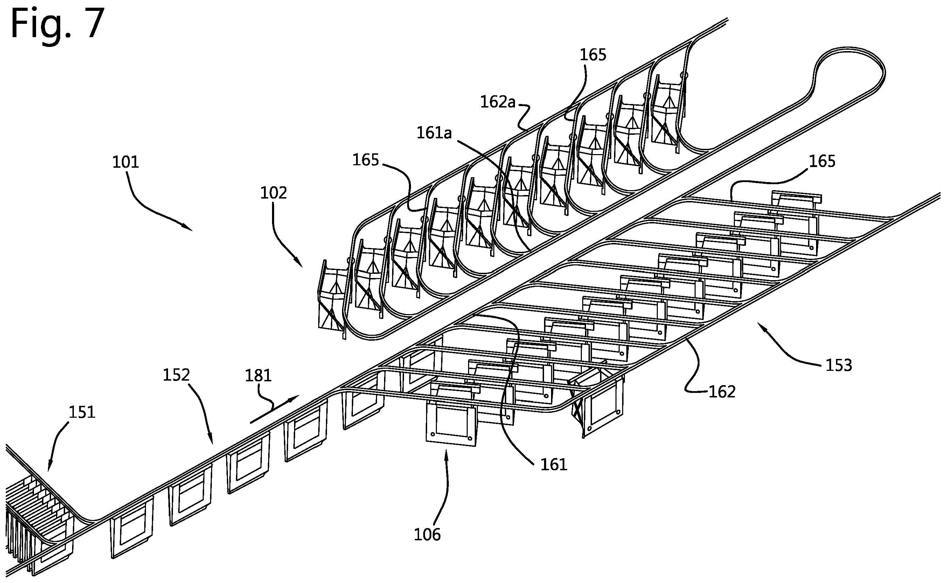

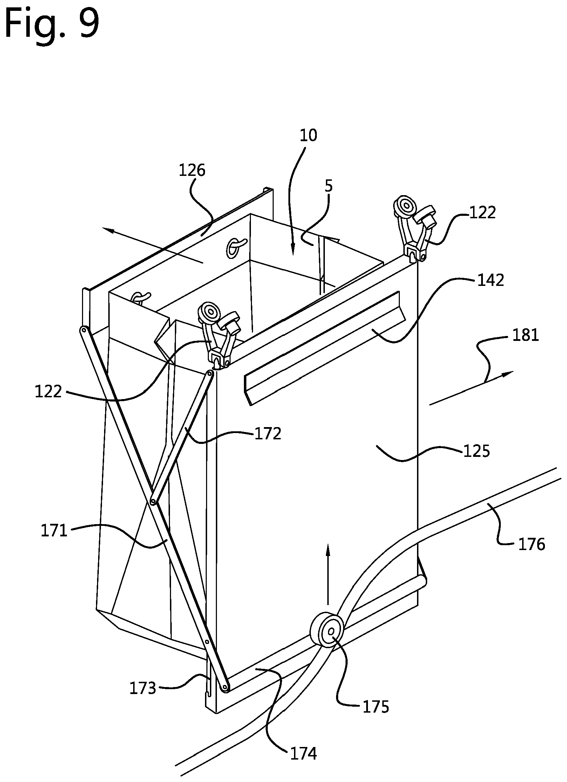

Figures 7 to 9 relate to a sorting device 101. Figure 7 shows a sketch of its bag transport device 102. In Figure 7, one can see a buffer region 151, a feed region 152 and a sorting region 153 belonging to the bag transport device 102. The bag transport device 102 differs specifically from the bag transport device 2 insofar as concerns the design of its bag holders 121, making it unnecessary to have two parallel rail guides to open the frame 119 of the bag holder 121. Each bag holder 121 comprises two parallel engaging frame parts 125, 126, each of which is configured with an operating strip 141, 142 having hooks 147 on which a bag 5 can be hung. Engaging frame part 125 is plate-shaped and extends over the entire height of a bag 5. Engaging frame part 126 is strip-shaped. The bag holder 121 is hung on the upper rim of the engaging frame part 125 on two trolleys 122. The two trolleys 122 are connected to said upper rim rotatably about rotary axes 124 for the negotiating of bends during the transport of the bag holders 121 in the transport direction 181.

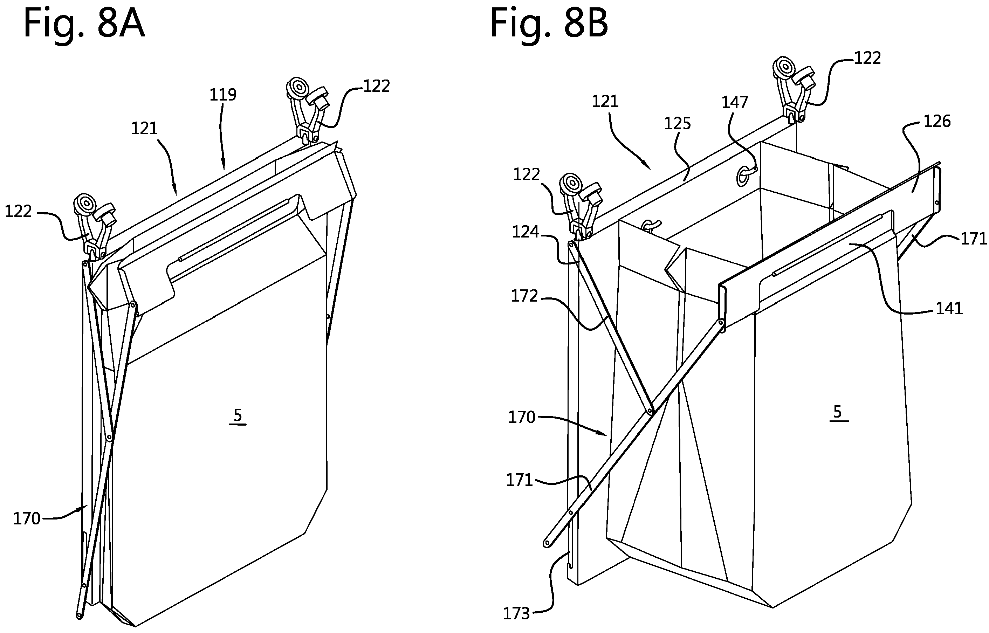

At the front and rear side, looking in the transport direction 181, the bag holder 21 is provided with a rod mechanism 170, each having operating rod 171 and a follower rod 172 (Figures 8a to 9). Operating rod 171 is hingeably connected to the engaging frame part 126 at an upper end thereof, and is hingeably connected near the opposite end to a sliding body which is slidable in a guide 173 which is provided in an upright edge of engaging frame part 125. At the side of engaging frame part 125 facing away from engaging frame part 126, the two operating rods 171 belonging to a bag holder 121 are mutually joined to a connection rod 174, in the middle of which a tracking wheel 175 is provided. This tracking wheel 175 can be brought into engagement with a guide 176, which is arranged stationary along the path of the tracking wheel. It is also conceivable for the guide 176 to be operable so as to bring it into the path of the tracking wheel or to keep it outside of this path. Thanks to the cooperation between the tracking wheel 175 and the guide 176 during and because of the transport of the bag holder 121 in the transport direction 181, the engaging frame part 126 can be moved away from the engaging frame part 125 by the operation of the two rod mechanisms 170, so that the bag holder 121 and thus the bag 5 hung from the bag holder 121 are opened. Thus, bags can be provided in the opened state at the location of the filling position 106 in order to be filled with products which are sorted by a sorting conveyor comparable to sorting conveyor 8.

Figure 7 shows that the bag transport device 102 has two single feed rail guides 161, 161a and two single removal rail guides 162, 162a within the sorting region 153. Between each pair of a feed rail guide 161, 161a and a removal rail guide 162, 162a, there extends a single sorting rail guide 165 per filling position 106, making an angle of around 45 degrees with respect to the corresponding feed rail guide 161, 161a and removal rail guide 162, 162a. At the location of a filling position 106, a bag 5 can take on the opened state by opening the frame 119 of a corresponding bag holder 121 in a manner described above with regard to Figures 8a to 9.

The product feed device 103 belonging to the sorting device 101 can be of the same type as product feed device 3 belonging to sorting device 1. The chutes of the corresponding sorting conveyor can extend parallel to the sorting rail guides 165, but they may also extend at right angles thereto. In the latter case, it would make sense for the products in Figure 7 to be taken not from left to right to the sorting region 153, but only from right to left from the right side in Figure 7, and thus opposite the direction of arrow 181 in Figure 7.

In a further embodiment, it is also possible for the bags used to have a zipper closure near the fill opening, with which the fill opening can be closed. For the closing of the zipper closure and thus the closing of the bag, the system used can have a zipper engaging device arranged along the displacement path of the bags, which can grasp the zipper slider of the zipper closure. Then if the zipper of the zipper closure extends parallel to the transport direction and the zipper slider in the opened state of the zipper closure is located at the downstream side of the zipper, the zipper slider can be temporarily stopped, so that the zipper, as it were, runs through the zipper closure and closes the zipper closure. The zipper engaging device can be arranged stationary along the displacement path, but it can also be moved with the aid of a displacement device between a position in the path of the zipper slider and a position outside the path of the zipper slider.

## Claims

1. A sorting system (1, 101) for the selective loading of bags (5) with discrete products (4) via fill openings (10) of the bags (5) situated at the respective top sides thereof, comprising
- a bag transport device (2, 102) for the selective transporting of bag holders (21, 121) with bags (5) hanging therefrom to one of multiple filling positions (6, 106), wherein at least some of the multiple filling positions (6, 106) are situated next to each other in a row of filling positions and wherein each bag holder (21, 121) comprises a frame (19, 119) having two engaging frame parts (25, 26; 125, 126) which can move away from each other into an open state of the frame (19, 119) and toward each other into a closed state of the frame (19, 119), which are designed to be connected to the bag (5) near its fill opening (10) on two sides of the fill opening (10) situated opposite each other in order for the fill opening (10) of the bag (5) to be opened by virtue of said connection in the open state of the frame (19, 119) and for the fill opening (10) of the bag (5) to be closed in the closed state of the frame (19, 119),
- a product feed device (3, 103) for the selective feeding of products (4) from the top side of the opened fill opening (10) of a bag (5) hanging from the bag transport device (2, 102) via the opened fill opening (10) to the bag (5) at the location of one of the multiple filling positions (6, 106), wherein the bag transport device (2, 102) is adapted to move the frame (19, 119) of the respective bag holder (21, 121) from the closed state to the open state by the transporting of a bag (5) to a selected filling position (6, 106),
**characterized in that** the bag transport device (2, 102) is provided with a transport guide (55a, 55b, 56, 61, 62, 65) and trolleys (22, 122) which are movable along the transport guide (55a, 55b, 56, 61, 62, 65) and wherein the bag holders (21, 121) are each hung from two trolleys (22, 122).

2. The system as claimed in claim 1, wherein the transport guide (61, 62, 65) comprises, both upstream and downstream from a filling position (6), preferably from each filling position (6), two parallel running transport guide portions (65a, 65b), each of which is adapted to guide one of the two trolleys (22) belonging to a bag holder (21), wherein the frame (19) belonging to the bag holder (21) extends in the opened state, looking from above, between the two parallel running transport guide portions (65a, 65b).

3. The system as claimed in claim 2, wherein the transport guide (61, 65) has a single feed transport guide portion (61), upstream from the two parallel running transport guide portions (65a, 65b), for the guiding of both trolleys (22) belonging to a bag holder (21), and wherein the transport guide (61, 65) has, between the single feed transport guide portion (61) on the one hand and the two parallel running transport guide portions (65a, 65b) on the other hand, two diverting switches (63, 66) for the guiding of a front trolley (22) belonging to a bag holder (21) from the single feed transport guide portion (61) to one of the two parallel running transport guide portions (65a, 65b) and for the guiding of a rear trolley (22) belonging to a bag holder (21) from the single feed transport guide portion (61) to the other one of the two parallel running transport guide portions (65a, 65b).

4. The system as claimed in claim 3, wherein the distance between the front and rear trolley (22) belonging to a bag holder (21) during the guiding on the feed transport guide portion (61) is greater than the distance between these two trolleys (22) during the guiding on the respective two parallel running transport guide portions (65a, 65b) at the location of the filling position (6).

5. The system as claimed in claim 2, 3 or 4, wherein the transport guide (62, 65) has, downstream from the two parallel transport guide portions (65a, 65b), a single removal transport guide portion (62) for the guiding of both trolleys (22) belonging to a bag holder (21), and wherein the transport guide (62, 65) has between the two parallel transport guide portions (65a, 65b) on the one hand and the single feed transport guide portion (61) on the other hand two merging switches (64, 67) for the guiding of the two trolleys (22) belonging to a bag holder (21) from the respective two parallel transport guide portions (65a, 65b) to the removal transport guide portion (62).

6. The system as claimed in one of the preceding claims, wherein two transport guide portions belonging to two filling positions (6) located next to each other and situated on opposite sides of the two filling positions (6) for at least a portion of their respective lengths are formed by a common feed transport guide portion (61), wherein the transport guide (61) at the downstream end of the common feed transport guide portion (61) is provided with a further diverting switch (63) at the downstream side from where the two filling positions (6) are located and/or by a common removal transport guide portion (62), wherein the transport guide (62) at the upstream end of the common removal transport guide portion (62) is provided with a further merging switch (64) at the upstream side from where the two filling positions (6) are located.

7. The system as claimed in one of the preceding claims, wherein the bag transport device (2, 102) is adapted to move the frame (19, 119) of the corresponding bag holder (21, 121) by virtue of the transporting of a bag (5) away from a selected filling position (6, 106) from the open state to the closed state.

8. The system as claimed in one of the preceding claims, wherein the engaging frame parts (25, 26; 125, 126) are adapted to move in the horizontal direction away from or toward each other during a movement between the open state and the closed state of the frame (19, 119).

9. The system as claimed in one of the preceding claims, wherein each engaging frame part (25, 26; 125, 126) is provided with at least one engaging body (47, 147) which is adapted to grasp a bag (5) releasably near its fill opening (10) for the connecting of the bag holder (21, 121) to the bag (5), wherein preferably at least one, further preferably each engaging body (47, 147) is operatively connected to an operating element (41, 42; 141, 142) for the control of the respective at least one or each engaging body (47, 147) for moving the engaging body (47, 147) between a position that can be reached by a bag (5) and a position that cannot be reached by a bag (5).

10. The system as claimed in one of the preceding claims, wherein two engaging frame parts (25, 26) are elongated and extend both in the open state and in the closed state parallel to each other and directly opposite each other, wherein preferably the two trolleys (22) belonging to a bag holder (21) are connected to the frame (19) at two oppositely situated ends of the two parallel engaging frame parts (25, 26).

11. The system as claimed in one of the preceding claims, wherein the frame (19) is a closed deformable frame which is adapted to completely surround or at least to follow the opening (10) of a bag (5), wherein preferably the closed frame (19) comprises two sets of mutually hingeably connected elongated connection frame parts (27, 28), wherein each set of connection frame parts (27, 28) is hingeably connected at mutually opposite ends thereof to respective ends of the two engaging frame parts (25, 26).

12. The system as claimed in claim 11, wherein the closed frame (19) comprises two sets of mutually hingeably connected elongated connection frame parts (27, 28), wherein each set of connection frame parts (27, 28) is hingeably connected at mutually opposite ends thereof to respective ends of the two engaging frame parts (25, 26) and wherein each set of connection frame parts (27, 28) comprises not more and not less than two connection frame parts (27, 28).

13. The system as claimed in claim 11 or 12, wherein the closed frame (19) comprises two sets of mutually hingeably connected elongated connection frame parts (27, 28), wherein each set of connection frame parts (27, 28) is hingeably connected at mutually opposite ends thereof to respective ends of the two engaging frame parts (25, 26) and wherein the two trolleys (22) belonging to a bag holder (21) are each connected to a set of the mutually hingeably connected connection frame parts (27, 28), preferably at the location of hinges (29-34) which hinge the respective connection frame parts (27, 28) to each other.

14. The system as claimed in one of the preceding claims, wherein the system (1, 101) comprises a zipper engaging device for grasping of a zipper slider of a zipper closure of a bag (5) for the closing of the zipper closure by a zipper engaging body of the zipper engaging device, wherein preferably the zipper engaging device is adapted to work by virtue of the transporting of a bag (5) with a zipper closure which is to be closed by the conveyor, whereby the zipper engaging device comes into engagement with the zipper slider of the zipper closure.

15. A method for the use of a sorting system (1, 101) according to one of the preceding claims, comprising:
- transporting of a bag (5) connected to a bag holder (21, 121) by the bag transport device (2, 102) to a filling position (6, 106),
- moving of the frame (19, 119) of the bag holder (21, 121) during said transporting of the bag (5) to the filling position (6, 106) and/or after arrival of the bag (5) at the filling position (6, 106) from the closed state to the open state, wherein the fill opening (10) of the bag (5) is opened,
- feeding of at least one product (4) by the product feed device (3, 103) to the filling position (6, 106), wherein the at least one product (4) drops into said bag (5) via its opened fill opening (10),
- transporting of the bag (5) filled with the at least one product (4) away from the filling position (6, 106) by the bag transport device (2, 102),
- moving of the frame (19, 119) of the bag holder (21, 121) from the open state to the closed state during the transporting of the bag (5) away from the filling position (6, 106) or still at the filling position (6, 106), wherein the fill opening (10) of the bag (5) is closed, the method further preferably comprising the releasing of the bag (5) filled with the at least one product (4) at the location of the filling position (6, 106) from the bag holder (21, 121) after the moving of the frame (19, 119) from the open state to the closed state.

## Patentansprüche

1. Sortiersystem (1, 101) zum selektiven Beladen von Beuteln (5) mit einzelnen Produkten (4) über Füllöffnungen (10) der Beutel (5), die sich an jeweiligen Oberseiten davon befinden, umfassend
- eine Beuteltransportvorrichtung (2, 102) zum selektiven Transportieren von Beutelhaltern (21, 121) mit daran hängenden Beuteln (5) zu einer von mehreren Füllpositionen (6, 106), wobei sich mindestens einige der mehreren Füllpositionen (6, 106) in einer Reihe von Füllpositionen nebeneinander befinden und wobei jeder Beutelhalter (21, 121) einen Rahmen (19, 119) mit zwei Eingriffsrahmenteilen (25, 26; 125, 126) umfasst, die sich voneinander weg in einen geöffneten Zustand des Rahmens (19, 119) und aufeinander zu in einen geschlossenen Zustand des Rahmens (19, 119) bewegen können, die dazu ausgebildet sind, mit dem Beutel (5) nahe seiner Füllöffnung (10) an zwei Seiten der Füllöffnung (10), die sich einander gegenüberliegend befinden, verbunden zu werden, sodass kraft dieser Verbindung im geöffneten Zustand des Rahmens (19, 119) die Füllöffnung (10) des Beutels (5) geöffnet ist und im geschlossenen Zustand des Rahmens (19, 119) die Füllöffnung (10) des Beutels (5) geschlossen ist,
- eine Produktzuführvorrichtung (3, 103) zum selektiven Zuführen von Produkten (4) von der Oberseite der geöffneten Füllöffnung (10) eines von der Beuteltransportvorrichtung (2, 102) hängenden Beutels (5) über die geöffnete Füllöffnung (10) zu dem Beutel (5) an der Stelle einer der mehreren Füllpositionen (6, 106), wobei die Beuteltransportvorrichtung (2, 102) angepasst ist, um den Rahmen (19, 119) des jeweiligen Beutelhalters (21, 121) durch Transportieren eines Beutels (5) zu einer ausgewählten Füllposition (6, 106) aus dem geschlossenen Zustand in den geöffneten Zustand zu bewegen,
**dadurch gekennzeichnet, dass** die Beuteltransportvorrichtung (2, 102) mit einer Transportführung (55a, 55b, 56, 61, 62, 65) und Laufwagen (22, 122), die entlang der Transportführung (55a, 55b, 56, 61, 62, 65) bewegbar sind, versehen ist, und wobei die Beutelhalter (21, 121) jeweils an zwei Laufwagen (22, 122) aufgehängt sind.

2. System nach Anspruch 1, wobei die Transportführung (61, 62, 65) sowohl stromaufwärts als auch stromabwärts einer Füllposition (6), vorzugsweise jeder Füllposition (6), zwei parallel verlaufende Transportführungsabschnitte (65a, 65b) umfasst, von denen jeder dazu angepasst ist, einen der beiden zu einem Beutelhalter (21) gehörenden Laufwagen (22) zu führen, wobei sich der zum Beutelhalter (21) gehörende Rahmen (19) in dem geöffneten Zustand von oben gesehen zwischen den zwei parallel verlaufenden Transportführungsabschnitten (65a, 65b) erstreckt.

3. System nach Anspruch 2, wobei die Transportführung (61, 65) stromaufwärts der zwei parallel verlaufenden Transportführungsabschnitte (65a, 65b) einen einzigen Zuführtransportführungsabschnitt (61) zum Führen beider Laufwagen (22), die zu einem Beutelhalter (21) gehören, aufweist, und wobei die Transportführung (61, 65) zwischen dem einzigen Zuführtransportführungsabschnitt (61) einerseits und den zwei parallel verlaufenden Transportführungsabschnitten (65a, 65b) andererseits zwei Abzweigweichen (63, 66) zum Führen eines zu einem Beutelhalter (21) gehörenden vorderen Laufwagens (22) von dem einzigen Zuführtransportführungsabschnitt (61) zu einem der zwei parallel verlaufenden Transportführungsabschnitte (65a, 65b) und zum Führen eines zu einem Beutelhalter (21) gehörenden hinteren Laufwagens (22) von dem einzigen Zuführtransportführungsabschnitt (61) zu dem anderen der zwei parallel verlaufenden Transportführungsabschnitte (65a, 65b) aufweist.

4. System nach Anspruch 3, wobei der Abstand zwischen dem vorderen und dem hinteren Laufwagen (22), die zu einem Beutelhalter (21) gehören, während des Führens auf dem Zuführtransportführungsabschnitt (61) größer als der Abstand zwischen diesen zwei Laufwagen (22) während des Führens auf den jeweiligen zwei parallel verlaufenden Transportführungsabschnitten (65a, 65b) an der Stelle der Füllposition (6) ist.

5. System nach Anspruch 2, 3 oder 4, wobei die Transportführung (62, 65) stromabwärts der zwei parallelen Transportführungsabschnitte (65a, 65b) einen einzigen Entnahmetransportführungsabschnitt (62) zum Führen beider Laufwagen (22), die zu einem Beutelhalter (21) gehören, aufweist und wobei die Transportführung (62, 65) zwischen den zwei parallelen Transportführungsabschnitten (65a, 65b) einerseits und dem einzigen Zuführtransportführungsabschnitt (61) andererseits zwei Zusammenführungsweichen (64, 67) zum Führen der zwei zu einem Beutelhalter (21) gehörenden Laufwagen (22) von den jeweiligen zwei parallelen Transportführungsabschnitten (65a, 65b) zu dem Entnahmetransportführungsabschnitt (62) aufweist.

6. System nach einem der vorhergehenden Ansprüche, wobei zwei Transportführungsabschnitte, die zu zwei Füllpositionen (6) gehören, die nebeneinander angeordnet sind, und sich auf gegenüberliegenden Seiten der zwei Füllpositionen (6) für mindestens einen Abschnitt ihrer jeweiligen Längen befinden, durch einen gemeinsamen Zuführtransportführungsabschnitt (61), wobei die Transportführung (61) an dem stromabwärtigen Ende des gemeinsamen Zuführtransportführungsabschnitts (61) mit einer weiteren Abzweigweiche (63) an der stromabwärtigen Seite, von der aus die zwei Füllpositionen (6) angeordnet sind, versehen ist, und/oder durch einen gemeinsamen Entnahmetransportführungsabschnitt (62) ausgebildet sind, wobei die Transportführung (62) an dem stromaufwärtigen Ende des gemeinsamen Entnahmetransportführungsabschnitts (62) mit einer weiteren Zusammenführungsweiche (64) an der stromaufwärtigen Seite, von wo sich die beiden Füllpositionen (6) befinden, versehen ist.

7. System nach einem der vorhergehenden Ansprüche, wobei die Beuteltransportvorrichtung (2, 102) angepasst ist, um den Rahmen (19, 119) des entsprechenden Beutelhalters (21, 121) kraft des Transportierens eines Beutels (5) von einer ausgewählten Füllposition (6, 106) weg aus dem geöffneten Zustand in den geschlossenen Zustand zu bewegen.

8. System nach einem der vorhergehenden Ansprüche, wobei die Eingriffsrahmenteile (25, 26; 125, 126) angepasst sind, um sich während einer Bewegung zwischen dem geöffneten Zustand und dem geschlossenen Zustand des Rahmens (19, 119) in der horizontalen Richtung voneinander weg- oder aufeinander zuzubewegen.

9. System nach einem der vorhergehenden Ansprüche, wobei jedes Eingriffsrahmenteil (25, 26; 125, 126) mit mindestens einem Eingriffskörper (47, 147) versehen ist, der angepasst ist, um einen Beutel (5) lösbar in der Nähe seiner Füllöffnung (10) zum Verbinden des Beutelhalters (21, 121) mit dem Beutel (5) zu ergreifen, wobei bevorzugt mindestens ein, stärker bevorzugt jeder Eingriffskörper (47, 147) mit einem Bedienelement (41, 42; 141, 142) zur Steuerung des jeweiligen mindestens einen oder jedes Eingriffskörpers (47, 147) zum Bewegen des Eingriffskörpers (47, 147) zwischen einer durch einen Beutel (5) erreichbaren Position und einer durch einen Beutel (5) nicht erreichbaren Position wirkverbunden ist.

10. System nach einem der vorhergehenden Ansprüche, wobei zwei Eingriffsrahmenteile (25, 26) langgestreckt sind und sich sowohl in dem geöffneten als auch in dem geschlossenen Zustand parallel zueinander und direkt gegenüberliegend erstrecken, wobei vorzugsweise die zwei zu einem Beutelhalter (21) gehörenden Laufwagen (22) an zwei gegenüberliegend befindlichen Enden der zwei parallelen Eingriffsrahmenteile (25, 26) mit dem Rahmen (19) verbunden sind.

11. System nach einem der vorhergehenden Ansprüche, wobei der Rahmen (19) ein geschlossener verformbarer Rahmen ist, der angepasst ist, um die Öffnung (10) eines Beutels (5) vollständig zu umgeben oder dieser mindestens zu folgen, wobei vorzugsweise der geschlossene Rahmen (19) zwei Sätze von miteinander gelenkig verbundenen länglichen Verbindungsrahmenteilen (27, 28) umfasst, wobei jeder Satz von Verbindungsrahmenteilen (27, 28) an einander gegenüberliegenden Enden davon gelenkig mit jeweiligen Enden der zwei Eingriffsrahmenteile (25, 26) verbunden ist.

12. System nach Anspruch 11, wobei der geschlossene Rahmen (19) zwei Sätze von miteinander gelenkig verbundenen länglichen Verbindungsrahmenteilen (27, 28) umfasst, wobei jeder Satz von Verbindungsrahmenteilen (27, 28) an einander gegenüberliegenden Enden davon gelenkig mit jeweiligen Enden der zwei Eingriffsrahmenteile (25, 26) verbunden ist und wobei jeder Satz von Verbindungsrahmenteilen (27, 28) nicht mehr und nicht weniger als zwei Verbindungsrahmenteile (27, 28) umfasst.

13. System nach Anspruch 11 oder 12, wobei der geschlossene Rahmen (19) zwei Sätze von miteinander gelenkig verbundenen länglichen Verbindungsrahmenteilen (27, 28) umfasst, wobei jeder Satz von Verbindungsrahmenteilen (27, 28) an einander gegenüberliegenden Enden davon gelenkig mit jeweiligen Enden der zwei Eingriffsrahmenteile (25, 26) verbunden ist und wobei die zwei zu einem Beutelhalter (21) gehörenden Laufwagen (22) jeweils mit einem Satz der miteinander gelenkig verbundenen Verbindungsrahmenteile (27, 28) verbunden sind, vorzugsweise an der Stelle von Gelenken (29-34), die die jeweiligen Verbindungsrahmenteile (27, 28) gelenkig miteinander verbinden.

14. System nach einem der vorhergehenden Ansprüche, wobei das System (1, 101) eine Reißverschluss-Eingriffsvorrichtung zum Greifen eines Reißverschlussschiebers einer Reißverschlussschließeinrichtung eines Beutels (5) zum Schließen der Reißverschlussschließeinrichtung durch einen Reißverschluss-Eingriffskörper der Reißverschluss-Eingriffsvorrichtung umfasst, wobei vorzugsweise die Reißverschluss-Eingriffsvorrichtung angepasst ist, um kraft des Transportierens eines Beutels (5) mit einer Reißverschlussschließeinrichtung, die durch den Förderer zu schließen ist, zu arbeiten, wodurch die Reißverschluss-Eingriffsvorrichtung in Eingriff mit dem Reißverschlussschieber der Reißverschlussschließeinrichtung kommt.

15. Verfahren zur Verwendung eines Sortiersystems (1, 101) gemäß einem der vorhergehenden Ansprüche, umfassend:
- Transportieren eines mit einem Beutelhalter (21, 121) verbundenen Beutels (5) durch die Beuteltransportvorrichtung (2, 102) zu einer Füllposition (6, 106),
- Bewegen des Rahmens (19, 119) des Beutelhalters (21, 121) während des Transportierens des Beutels (5) zu der Füllposition (6, 106) und/oder nach Ankunft des Beutels (5) an der Füllposition (6, 106) aus dem geschlossenen Zustand in den geöffneten Zustand, wobei die Füllöffnung (10) des Beutels (5) geöffnet wird,
- Zuführen mindestens eines Produkts (4) durch die Produktzuführvorrichtung (3, 103) zu der Füllposition (6, 106), wobei das mindestens eine Produkt (4) in den Beutel (5) über seine geöffnete Füllöffnung (10) fällt,
- Transportieren des mit dem mindestens einen Produkt (4) gefüllten Beutels (5) durch die Beuteltransportvorrichtung (2, 102) weg von der Füllposition (6, 106),
- Bewegen des Rahmens (19, 119) des Beutelhalters (21, 121) aus dem geöffneten Zustand in den geschlossenen Zustand während des Transportierens des Beutels (5) weg von der Füllposition (6, 106) oder noch an der Füllposition (6, 106), wobei die Füllöffnung (10) des Beutels (5) geschlossen wird, wobei das Verfahren ferner bevorzugt das Freigeben des mit dem mindestens einen Produkt (4) gefüllten Beutels (5) an der Stelle der Füllposition (6, 106) von dem Beutelhalter (21, 121) nach dem Bewegen des Rahmens (19, 119) aus dem geöffneten Zustand in den geschlossenen Zustand umfasst.

## Revendications

1. Système de tri (1, 101) permettant le chargement sélectif de sacs (5) avec des produits discrets (4) par des ouvertures de remplissage (10) des sacs (5) situées au niveau des côtés supérieurs respectifs de ceux-ci, comprenant
- un dispositif de transport de sacs (2, 102) destiné au transport sélectif de porte-sacs (21, 121) avec des sacs (5) suspendus à ceux-ci en l'une des multiples positions de remplissage (6, 106), au moins certaines des multiples positions de remplissage (6, 106) étant situées les unes à côté des autres dans une rangée de positions de remplissage et chaque porte-sacs (21, 121) comprenant un cadre (19, 119) possédant deux parties de cadre de mise en prise (25, 26 ; 125, 126) qui peuvent s'éloigner l'une de l'autre dans un état ouvert du cadre (19, 119) et l'une vers l'autre dans un état fermé du cadre (19, 119), qui sont conçues pour être raccordées au sac (5) à proximité de leur ouverture de remplissage (10) sur deux côtés de l'ouverture de remplissage (10) situés l'un en face de l'autre afin que l'ouverture de remplissage (10) du sac (5) soit ouverte grâce audit raccordement à l'état ouvert du cadre (19, 119) et que l'ouverture de remplissage (10) du sac (5) soit fermée à l'état fermé du cadre (19, 119),
- un dispositif d'alimentation en produits (3, 103) destiné à l'alimentation sélective en produits (4) depuis le côté supérieur de l'ouverture de remplissage ouverte (10) d'un sac (5) suspendu au dispositif de transport de sacs (2, 102) par l'ouverture de remplissage ouverte (10) jusque dans le sac (5) à l'emplacement de l'une des multiples positions de remplissage (6, 106), ledit dispositif de transport de sacs (2, 102) étant adapté au déplacement du cadre (19, 119) du porte-sac respectif (21, 121) de l'état fermé à l'état ouvert par le transport d'un sac (5) jusqu'à une position de remplissage sélectionnée (6, 106),
**caractérisé en ce que** le dispositif de transport de sacs (2, 102) est pourvu d'un guide de transport (55a, 55b, 56, 61, 62, 65) et de chariots (22, 122) qui sont mobiles le long du guide de transport (55a, 55b, 56, 61, 62, 65) et lesdits porte-sacs (21, 121) étant chacun suspendus à deux chariots (22, 122).

2. Système selon la revendication 1, ledit guide de transport (61, 62, 65) comprenant, à la fois en amont et en aval d'une position de remplissage (6), de préférence à partir de chaque position de remplissage (6), deux parties de guide de transport parallèles (65a, 65b), chacune étant adaptée au guidage de l'un des deux chariots (22) appartenant à un porte-sac (21), ledit cadre (19) appartenant au porte-sac (21) s'étendant à l'état ouvert, en regardant depuis le dessus, entre les deux parties de guide de transport parallèles (65a, 65b).

3. Système selon la revendication 2, ledit guide de transport (61, 65) comportant une partie de guide de transport d'alimentation (61), en amont des deux parties de guide de transport parallèles (65a, 65b), pour le guidage des deux chariots (22) appartenant à un porte-sac (21), et ledit guide de transport (61, 65) comportant, entre la partie de guide de transport d'alimentation unique (61) d'une part et les deux parties de guide de transport parallèles (65a, 65b) d'autre part, deux aiguillages de déviation (63, 66) destinés au guidage d'un chariot avant (22) appartenant à un porte-sac (21) depuis la partie de guide de transport d'alimentation unique (61) jusqu'à l'une des deux parties de guide de transport parallèles (65a, 65b) et au guidage d'un chariot arrière (22) appartenant à un porte-sac (21) depuis la partie de guide de transport d'alimentation unique (61) jusqu'à l'autre des deux parties de guide de transport parallèles (65a, 65b).

4. Système selon la revendication 3, ladite distance entre les chariots avant et arrière (22) appartenant à un porte-sac (21) pendant le guidage sur la partie de guidage de transport d'alimentation (61) étant supérieure à la distance entre ces deux chariots (22) pendant le guidage sur les deux parties de guidage de transport parallèles respectives (65a, 65b) à l'emplacement de la position de remplissage (6).

5. Système selon la revendication 2, 3 ou 4, ledit guide de transport (62, 65) comportant, en aval des deux parties de guide de transport parallèles (65a, 65b), une partie de guide de transport de retrait unique (62) destinée au guidage des deux chariots (22) appartenant à un porte-sac (21), et ledit guide de transport (62, 65) comportant entre les deux parties de guide de transport parallèles (65a, 65b) d'une part et la partie de guide de transport d'alimentation unique (61) d'autre part deux aiguillages de regroupement (64, 67) destinés au guidage des deux chariots (22) appartenant à un porte-sac (21) depuis les deux parties de guide de transport parallèles respectives (65a, 65b) jusqu'à la partie de guide de transport de retrait (62).

6. Système selon l'une des revendications précédentes, deux parties de guide de transport appartenant à deux positions de remplissage (6) situées l'une à côté de l'autre et situées sur des côtés opposés des deux positions de remplissage (6) pour au moins une partie de leurs longueurs respectives étant formées par une partie de guide de transport d'alimentation commune (61), ledit guide de transport (61) au niveau de l'extrémité aval de la partie de guide de transport d'alimentation commune (61) étant pourvu d'un autre aiguillage de déviation (63) du côté aval à partir duquel les deux positions de remplissage (6) sont situées et/ou par une partie de guide de transport de retrait commune (62), ledit guide de transport (62) au niveau de l'extrémité amont de la partie de guide de transport de retrait commune (62) étant pourvu d'un autre aiguillage de regroupement (64) du côté amont à partir duquel les deux positions de remplissage (6) sont situées.

7. Système selon l'une des revendications précédentes, ledit dispositif de transport de sacs (2, 102) étant adapté au déplacement du cadre (19, 119) du porte-sacs correspondant (21, 121) grâce au transport d'un sac (5) en s'éloignant d'une position de remplissage sélectionnée (6, 106) de l'état ouvert à l'état fermé.

8. Système selon l'une des revendications précédentes, lesdites parties de cadre de mise en prise (25, 26 ; 125, 126) étant adaptées au déplacement suivant la direction horizontale en s'éloignant ou en se rapprochant l'une de l'autre pendant un déplacement entre l'état ouvert et l'état fermé du cadre (19, 119).

9. Système selon l'une des revendications précédentes, chaque partie de cadre de mise en prise (25, 26 ; 125, 126) étant pourvue d'au moins un corps de mise en prise (47, 147) qui est adapté à la saisie d'un sac (5) de manière libérable à proximité de son ouverture de remplissage (10) pour la raccordement du porte-sac (21, 121) au sac (5), de préférence au moins un, de préférence encore chaque corps de mise en prise (47, 147) étant raccordé de manière fonctionnelle à un élément de fonctionnement (41, 42 ; 141, 142) destiné à la commande dudit au moins un ou de chaque corps de mise en prise respectif (47, 147) pour déplacer le corps de mise en prise (47, 147) entre une position qui peut être atteinte par un sac (5) et une position qui ne peut pas être atteinte par un sac (5).

10. Système selon l'une des revendications précédentes, lesdites deux parties de cadre de mise en prise (25, 26) étant allongées et s'étendant à la fois à l'état ouvert et à l'état fermé parallèlement l'une à l'autre et directement opposées l'une à l'autre, lesdits deux chariots (22) appartenant à un porte-sac (21) étant de préférence raccordés au cadre (19) au niveau de deux extrémités opposées des deux parties de cadre de mise en prise parallèles (25, 26).

11. Système selon l'une des revendications précédentes, ledit cadre (19) étant un cadre déformable fermé qui est adapté à l'encerclement complet ou au moins au suivi de l'ouverture (10) d'un sac (5), ledit cadre fermé (19) comprenant de préférence deux ensembles de parties de cadre de raccordement allongées raccordées de manière articulée l'une à l'autre (27, 28), chaque ensemble de parties de cadre de raccordement (27, 28) étant raccordées de manière articulée au niveau de leurs extrémités mutuellement opposées aux extrémités respectives des deux parties de cadre de mise en prise (25, 26).

12. Système selon la revendication 11, ledit cadre fermé (19) comprenant deux ensembles de parties de cadre de raccordement allongées mutuellement raccordées de manière articulée (27, 28), chaque ensemble de parties de cadre de raccordement (27, 28) étant raccordé de manière articulée au niveau de ses extrémités mutuellement opposées aux extrémités respectives des deux parties de cadre de mise en prise (25, 26) et chaque ensemble de parties de cadre de raccordement (27, 28) comprenant pas plus et pas moins de deux parties de cadre de raccordement (27, 28).

13. Système selon la revendication 11 ou 12, ledit cadre fermé (19) comprenant deux ensembles de parties de cadre de raccordement allongées raccordées de manière articulée l'une à l'autre (27, 28), chaque ensemble de parties de cadre de raccordement (27, 28) étant raccordées de manière articulée au niveau de leurs extrémités mutuellement opposées aux extrémités respectives des deux parties de cadre de mise en prise (25, 26) et lesdits deux chariots (22) appartenant à un porte-sac (21) étant chacun raccordés à un ensemble des parties de cadre de raccordement raccordées de manière articulée l'une à l'autre (27, 28), de préférence au niveau de l'emplacement des charnières (29 à 34) qui articulent les parties de cadre de raccordement respectives (27, 28) l'une par rapport à l'autre.

14. Système selon l'une des revendications précédentes, ledit système (1, 101) comprenant un dispositif de mise en prise de fermeture à glissière destiné à la saisie d'un curseur de fermeture à glissière d'une fermeture de fermeture à glissière d'un sac (5) pour la fermeture de la fermeture à glissière par un corps de mise en prise de fermeture à glissière du dispositif de mise en prise de fermeture à glissière, ledit dispositif de mise en prise de fermeture à glissière étant de préférence adapté au travail grâce au transport d'un sac (5) avec une fermeture à glissière qui doit être fermée par le convoyeur, grâce à quoi le dispositif de mise en prise de fermeture à glissière vient en prise avec le curseur de fermeture à glissière de la fermeture à glissière.

15. Procédé d'utilisation d'un système de tri (1, 101) selon l'une des revendications précédentes, comprenant :
- le transport d'un sac (5) raccordé à un porte-sac (21, 121) par le dispositif de transport de sacs (2, 102) jusqu'à une position de remplissage (6, 106),
- le déplacement du cadre (19, 119) du porte-sac (21, 121) pendant ledit transport du sac (5) en position de remplissage (6, 106) et/ou après l'arrivée du sac (5) en position de remplissage (6, 106) de l'état fermé à l'état ouvert, ladite ouverture de remplissage (10) du sac (5) étant ouverte,
- l'alimentation d'au moins un produit (4) par le dispositif d'alimentation en produits (3, 103) dans la position de remplissage (6, 106), ledit au moins un produit (4) tombant dans ledit sac (5) par son ouverture de remplissage ouverte (10),
- le transport du sac (5) rempli dudit au moins un produit (4) en s'éloignant de la position de remplissage (6, 106) par le dispositif de transport de sacs (2, 102),
- le déplacement du cadre (19, 119) du porte-sac (21, 121) de l'état ouvert à l'état fermé pendant le transport du sac (5) en s'éloignant de la position de remplissage (6, 106) ou toujours au niveau de la position de remplissage (6, 106), ladite ouverture de remplissage (10) du sac (5) étant fermée, le procédé comprenant en outre de préférence la libération du sac (5) rempli dudit au moins un produit (4) au niveau de l'emplacement de la position de remplissage (6, 106) du porte-sac (21, 121) après le déplacement du cadre (19, 119) de l'état ouvert à l'état fermé.
